# EUROPEAN PATENT APPLICATION

(11) **EP 1 880 610 A2**
(43) Date of publication of application: **23.01.2008**
(21) Application number: 07112410.1
(22) Date of filing: 13.07.2007
(51) Int. Cl.: A21C 9/08, A21C 13/00

(54) **An overturning support plate for bread having different forms or other rising foods**

(30) Priority: 21.07.2006 IT MI20061423
(71) Applicant: Ars Pan S.r.l., 28040 Marano Ticino (NO) (IT)
(72) Inventor: Sacco, Matteo, 28100 Novara (IT)
(74) Representative: Mittler, Enrico

(57) **Abstract**

There is described an overturning support plate (3) for bread (1, 2) having different forms or other rising foods, which is provided with two opposite surfaces (32, 33) for the resting of bread (1, 2); a first surface (32) displays flexible pockets (4) for the housing of baguette-type bread (2), and a second surface (33) is rigid and flat for the resting of traditional-type bread (1). There are provided means (9) to lift the bottom of said pockets (4) in a suitable position for the extraction of the baguettes (2) from said pockets (4).

## Description

The present invention relates to an overturning support plate for bread having different forms or other rising foods.

Bread is a food product which may have many forms, which are characterised by ingredients, shape, size and other peculiarities. Hereafter, reference is made to two different types, distinguished on the basis of the shape and of the related rising technique: the "traditional shape" bread, characterised in that the spatial dimensions are not so different one from the other, and the "baguette", also known as "French stick" or "French loaf", and characterised by the typical elongated shape, in which one dimension is definitely greater than the other two.

In recent years, the industrial production of bread has enormously increased, the latter being achieved by the introduction of automated systems that perform the processing operations and produce both traditional shape bread and baguettes.

There are two different types of industrial systems for the production of bread among which the baguette/French bread/French loaf types. A first type comprises the rising and baking of bread on appropriate supports (baking tins, moulds, plates having an appropriate shape, etc.). The second type again comprises the rising on appropriate supports (baking tins, moulds, plates having an appropriate shape, etc.), but the baking of the product is carried out without any support, that is directly on the bottom of the oven.

The present invention relates and is applied to the second type of systems, that is those based on the rising with a support and on the baking without a support, that is the direct baking on the bottom of the oven.

In this second type of system, depending on the type of bread being produced, different techniques are commonly used during rising: traditional shape bread normally rests on rigid and smooth material plates, for instance stainless steel, whereas baguettes are usually housed in cotton or even plastic material compartments.

Therefore, during rising the above said industrial production often requires the use of different support plates: the result is a higher cost and an additional size in systems which are normally the site for other considerably cumbersome machinery.

It should also be considered that the production of baguettes by means of automatic systems included in said second above said type poses a further problem, due to the extraction difficulty from the pocket; actually, it would be ideal for the bread to rest on a flat surface during the withdrawal.

In view of the described state of the art, it is the object of the present invention to obtain a support plate for bread, which overcomes the above mentioned drawbacks regarding costs and size and allows an easy extraction of the baguettes.

According to the present invention, such an object is achieved by means of an overturning support plate for rising bread, characterised in that it is provided with two opposite surfaces for the resting of bread, a first surface displaying flexible pockets for the housing of bread of the baguette-type, and a second surface being rigid and flat for the resting of bread of the traditional-type, with means being provided to lift the bottom of said pockets to a suitable position for the extraction of the baguette from said pockets.

In this manner, the plate may be configured in three positions:
- a "pocket" position for the rising of the baguettes: the plate displays the pockets in an upper position; the baguettes may rise in the pocket according to the common techniques;
- an "extraction" position for the extraction of the baguettes: the pockets are arranged in an upper position, but, with respect to the previous, the bottom of the pockets is lifted in order to bring the baguettes in a substantially flat position that facilitates the extraction of the baguettes;
- an "overturned" position for the rising of the traditional shape bread.

The transition from the "pocket" position to the "extraction" position is obtained by manufacturing the plate according to the invention in two parts which may reciprocally be drawn together or apart. One of the two parts comprises said flexible pocket surface and the other one of said parts comprises said rigid and flat surface and comprises splines which, when said parts are reciprocally drawn together, may engage with the bottom of the pockets for an arrangement in a suitable flat position for the extraction of the bread from the pockets themselves.

The features and the advantages of the present invention will become apparent from the following detailed description of a practical embodiment thereof, shown by way of non-limitative example in the accompanying drawings, in which:
figure 1 shows the plan view of the plate when it is in a "pocket" position;
figure 2 shows a longitudinal section view of the plate along line II-II when the plate is in a "pocket" position;
figure 3 shows a cross-sectional view of the plate according to line III-III when the plate is in a "pocket" position;
figure 4 shows a section view of the plate which is similar to that in figure 2 but with the plate in an "extraction" position;
figure 5 shows a section view of the plate which is similar to that in figure 3 but with the plate in an "extraction" position;
figure 6 shows a view of a part of the section of the plate similar to that in figure 2 but with the plate in an "overturned" position;
figure 7 shows a section view of the plate which is similar to that in figure 3, but with the plate in an "overturned" position;
figure 8 shows an enlarged detail of the retaining mechanism of the plate in the position in figure 2;
figure 9 shows the same enlarged detail in the "extraction" position;
figure 10 shows the same enlarged detail at a time when the retaining mechanism is unlocked for the return of the plate in an "extraction" position;
figure 11 shows a plan view of a traditional-type bread and a baguette.

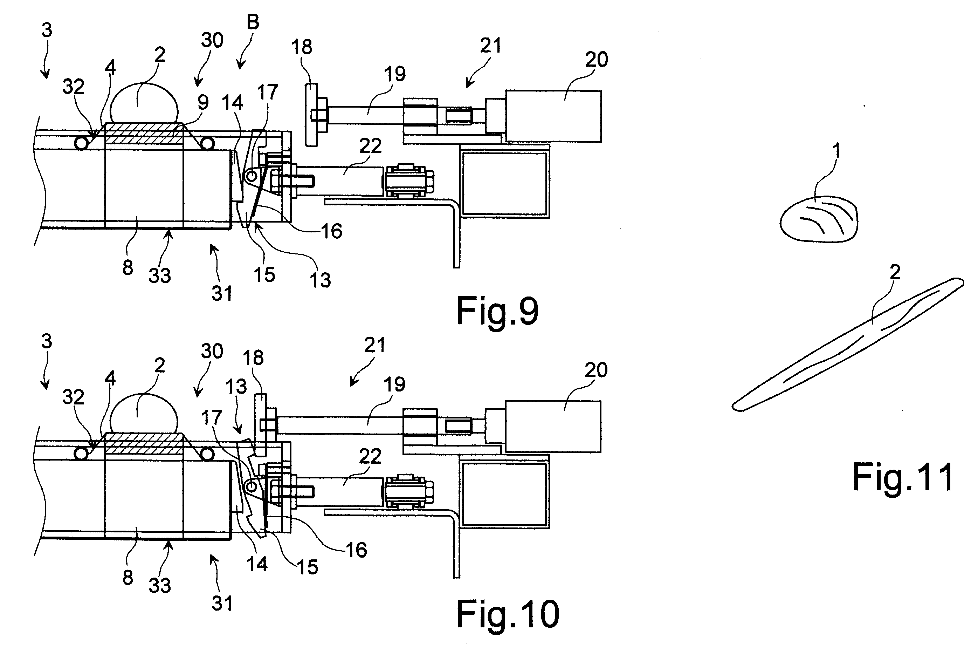

An example of "traditional shape" bread 1 and an example of baguette 2 are shown in figure 11.

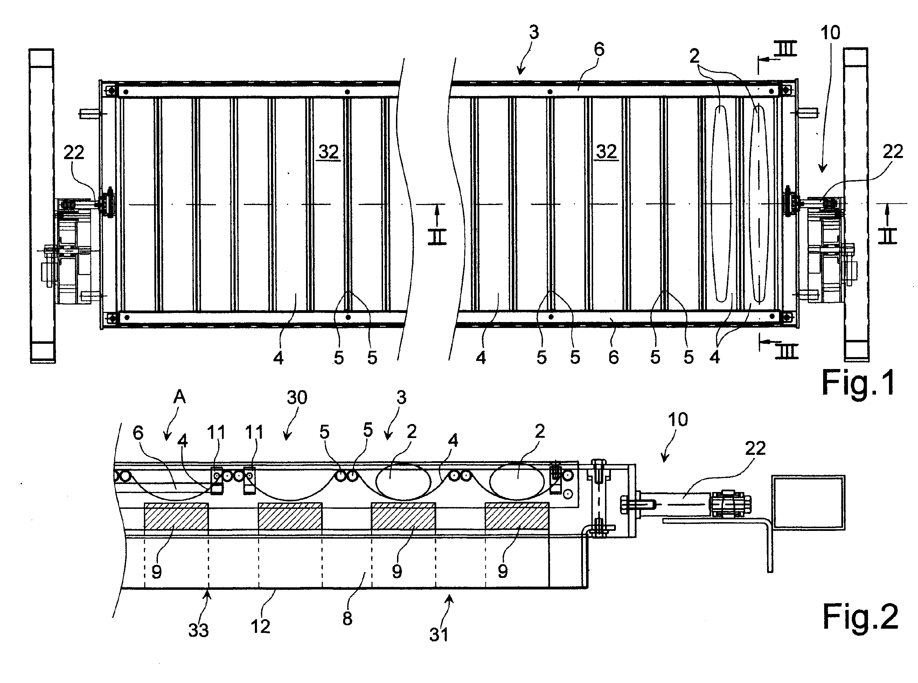

Figures 2-5 show a support plate 3 for the above said bread (1, 2), which consists of two parts 30 and 31 which may be reciprocally drawn together and apart.

The part 30 comprises a resting surface 32 for baguette-type bread 2, which consists of a plurality of parallel cotton or plastic material pockets 4, supported by bars 5 and 6, the latter supported in turn by hooked elements 11.

The part 31 takes in turn a resting surface 33 for traditional shape bread 1, which consists of a stainless steel top 12, within which there are applied splines for extraction 9 made of expanded polystyrene and soft overlaying spongy material, which are hooked to the stainless steel top 12 under respective pockets 4.

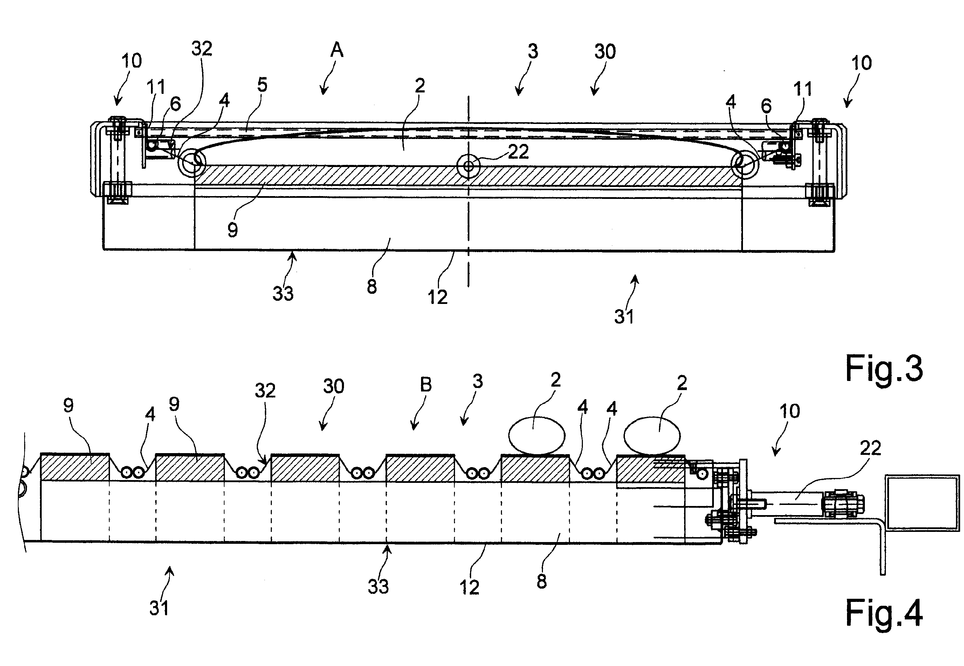

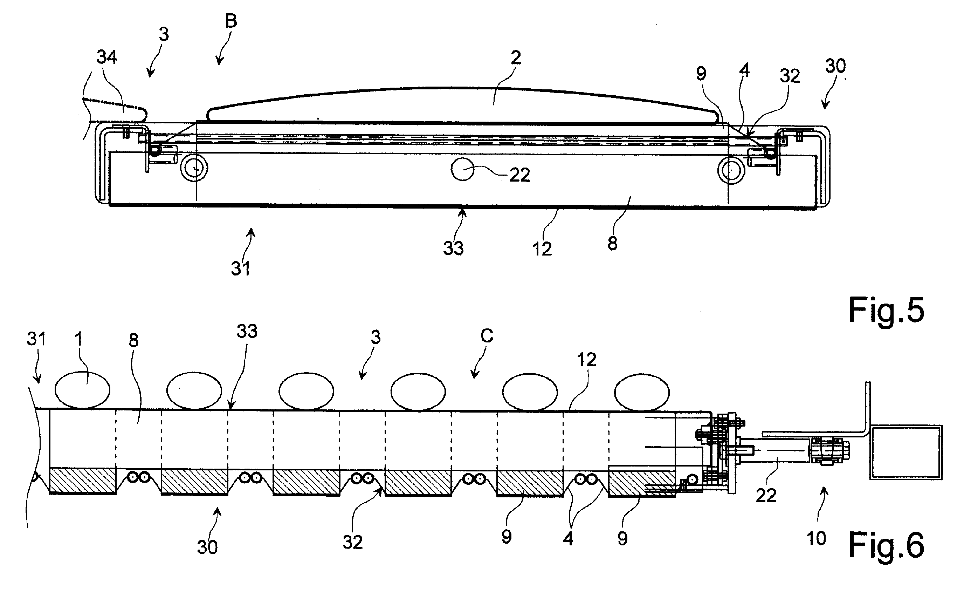

The part 31 may be displaced with respect to the part 30 between a drawn-apart position, shown in figures 2 and 3 and indicated as "pocket" position A, in which the splines 9 are positioned under the pockets 4, and a drawn-together position, shown in figures 4 and 5 and indicated as "extraction" position B, in which the splines 9 have lifted the bottom of the pockets 4 to bring the latter in a suitable flat lifted position for the extraction of the baguettes 2 from the pockets 4 by a shovel 34 or the like.

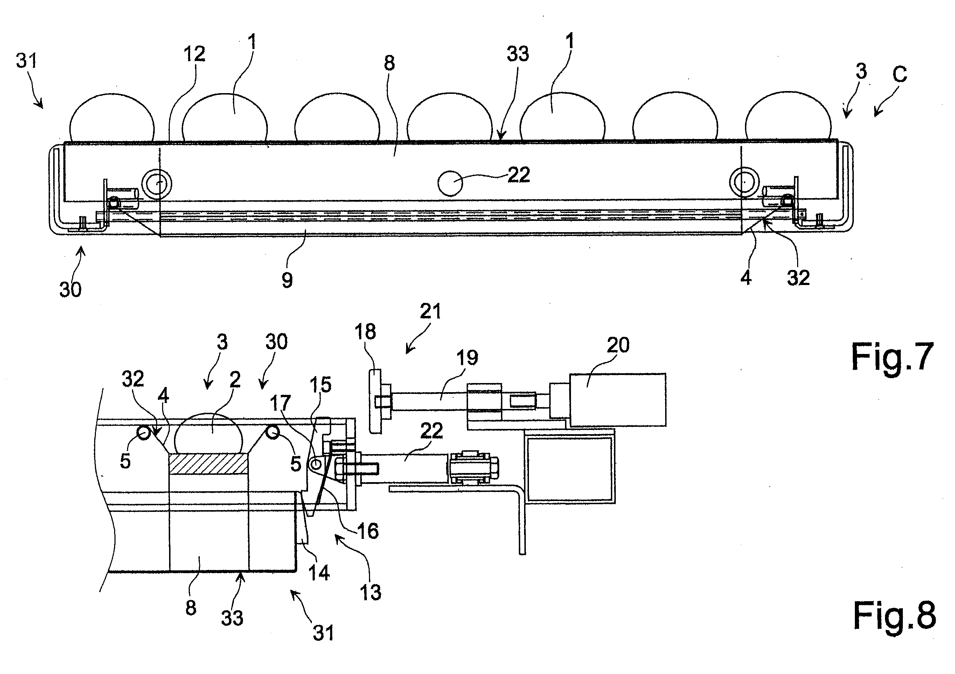

As shown in figures 6 and 7, the plate 3 is overturned by 180° with respect to the position of figures 2-3, rotated around the axis of pins and arranged in an "overturned" position C suitable for the support of a plurality of traditional-type breads 1 in virtue of the smooth surface 33 defined by the plate 12.

Subsequently, the plate 3 may be returned to the "pocket" position A in figures 2-3.

The upward vertical translation of the part 31 is obtained by means of common lifting means which are not shown in the figures.

Figures 8-10 show a possible retaining mechanism 13, to maintain the part 31 in an "extraction" position. A tooth 14, which may be hooked to a hooking ratchet 15 that may rotate around a pin 17, is integral to the part 31.

When the plate is in a "pocket" position A, the block is in a lowered position and the tooth 14 and the ratchet 15 are unhooked (figure 8). When the plate is in an "extraction" position B, the block is lifted and the tooth 14 and the ratchet 5 are hooked (figure 9). The hooking ratchet is thrust by a spring 16 towards the tooth 14. To unlock the retaining mechanism, an unlocking mechanism 21 may be employed comprising a hammer 18 pushed by a piston rod 19 controlled by a pneumatic cylinder 20: the strength of the hammer 18 overcomes the resistance of the lamination 16, thus releasing the hooking of the tooth 14 (figure 10): there follows the fall by gravity of the block 8, which brings the plate in a "pocket" position A; the hammer 18 is withdrawn, and the ratchet, pushed by the lamination 16 returns to the position in figure 8.

## Claims

1. An overturning support plate for bread (1, 2) having different forms or other rising foods, **characterised in that** it is provided with two opposite surfaces (32, 33) for resting the bread (1, 2), a first surface (32) displaying flexible pockets (4) for the housing of the baguette-type bread (2), and a second surface (33) being rigid and flat for the resting of traditional-type bread (1), with means (9) being provided to lift the bottom of said pockets (4) in a suitable position for the extraction of the baguettes (2) from said pockets (4).

2. An overturning support plate according to claim 1, **characterised in that** it comprises two parts (30, 31) which may be reciprocally drawn together and apart, one (30) of said parts configured with said pockets (4) for the housing of baguettes (2), and the other (31) of said parts being configured with a rigid and flat surface (33) provided with splines (9) which, when said parts are reciprocally drawn-together, are capable of engaging with the bottom of the pockets (4) to arrange them in a suitable flat position for the extraction of the bread (2) from the pockets (4) themselves.

3. A support plate according to any of the preceding claims, **characterised in that** it may be configured in at least three positions: a "pocket" position (A), wherein the employable surface of said plate is that comprising said pockets (4), and allows the housing of the baguette-type bread (2) on said pockets (4) for the rising according to the common techniques; an "extraction" position (B), that differs from the preceding position (A) **in that** the bottom of the pockets (4) is lifted, and allows a simple extraction of the bread (2) from the plate; an "overturned" position (C), wherein the employable surface of said plate is the flat one (33), which allows the rising of the traditional shape bread (1) according to the common techniques.

4. A support plate according to any of claims 2 and 3, **characterised in that** said parts (30, 31) of the plate may be locked in an "extraction" position (B) by means of a system formed by a ratchet (15) that may be engaged with a tooth (14).

5. A support plate according to claim 4, **characterised in that**, for the unlocking from the "extraction" position (B), there is provided a hammer (18) that pushes said ratchet (15), by releasing said tooth (14) and allowing the fall of a part of the plate by gravity.

6. A support plate according to any of the preceding claims, **characterised in that** said pockets (4) are made of cotton or plastic material.

7. A support plate according to any of the preceding claims, **characterised in that** said flexible pockets (4) are laterally supported by bars (5, 6).

8. A support plate according to any of claims 2 to 7, **characterised in that** said part (31) having a rigid and flat surface (33) comprises a group of splines (9) arranged under respective pockets (4).

9. A support plate according to any of the preceding claims, **characterised in that** said splines (9) are made of expanded polystyrene and soft spongy overlaid material.
